Europäisches Patentamt

European Patent Office

Office européen des brevets

(19)

(11) **EP 1 220 773 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(21) Anmeldenummer: **00966037.4**

(22) Anmeldetag: **15.09.2000**

(51) Int Cl.$^7$: **B62D 5/04**

(86) Internationale Anmeldenummer:
**PCT/EP00/09070**

(87) Internationale Veröffentlichungsnummer:
**WO 01/023242 (05.04.2001 Gazette 2001/14)**

(54) **SYSTEM ZUR STEUERUNG VON FAHRZEUGKOMPONENTEN NACH DEM "DRIVE BY WIRE"-PRINZIP**

SYSTEM FOR CONTROLLING MOTOR VEHICLE COMPONENTS ACCORDING TO THE "DRIVE-BY-WIRE" PRINCIPLE

SYSTEME POUR COMMANDER DES COMPOSANTS DE VEHICULES SELON LE PRINCIPE DE LA CONDUITE PAR FIL

(84) Benannte Vertragsstaaten:
**DE ES FR GB IT**

(30) Priorität: **25.09.1999 DE 19946073**

(43) Veröffentlichungstag der Anmeldung:
**10.07.2002 Patentblatt 2002/28**

(73) Patentinhaber: **Volkswagen Aktiengesellschaft 38436 Wolfsburg (DE)**

(72) Erfinder: **KREFT, Jörg 38126 Braunschweig (DE)**

(56) Entgegenhaltungen:
**DE-A- 4 241 849        DE-A- 19 754 258
US-A- 5 347 458**

**Beschreibung**

Die Erfindung betrifft ein System zur Steuerung von Fahrzeugkomponenten, insbesondere zur Lenkung eines Fahrzeuges nach dem "Drive By Wire"-Prinzip.

Die grundlegende Eigenschaft eines "Drive By Wire"-Fahrzeuges besteht darin, daß weder zwischen Fußhebelwerk und den zugehörigen Komponenten (Gas, Bremse, Kupplung) noch zwischen Lenkrad und den damit gekoppelten Rädern direkte mechanische Verbindungen existieren. Die vom Fahrer ausgeübten Steuerungsmaßnahmen werden nicht mehr direkt auf mechanischem Wege umgesetzt, sondern über Sensoren an den Pedalen und dem Lenkrad aufgenommen, durch Steuerrechner elektronisch verarbeitet und als elektrische Stellgröße an die zugeordneten Aktoren weitergeleitet.

Vorteile eines "Drive By Wire"-Systems sind unter anderem die Erhöhung der passiven Sicherheit, da z. B. eine Lenksäulenintrusion in den Fahrzeuginnenraum durch den Verzicht auf eine Lenksäule ausgeschlossen ist. Femer läßt sich der Komfort des Fahrzeuges verbessern, indem z. B. eine freie Wahl des Rückstellmoments am Lenkrad sowie eine variable Übersetzung zwischen Lenkrad und den damit gekoppelten Rädern ermöglicht wird. Des weiteren ergeben sich auch Konstruktionsvorteile. So wird z. B. die Konstruktion von Rechts-/Linkslenkerausführungen bzw. deren Auswahl und auch die Umrüstung zu Fahrschulfahrzeugen oder behindertengerechten Fahrzeugen erleichtert. Außerdem vereinfachen "Drive By Wire"-Systeme die Systemintegration von Einrichtungen wie Fahrstabilitätsregelung, Antiblockiersystem, Antischlupfregelung, automatische Geschwindigkeitsregelung, usw., wodurch eine entsprechende Kostenreduzierung erzielt werden kann.

Andererseits besteht bei einem "By Wire"-System jedoch die Problematik, daß bei einem Fehler in einer seiner Komponenten ein Übergang in einen sicheren Zustand nicht garantiert ist. Anders als z. B. bei einer herkömmlichen Servolenkung, bei der im Falle eines Fehlers, der zum Ausfall der Servounterstützung der Lenkung führt, immer noch die grundsätzliche Lenkfunktion erhalten bleibt, kann in einem "By Wire"-System der Ausfall einer Komponente fatale Folgen haben, sofern nicht konstruktive bzw. konzeptionelle Sicherheitsmaßnahmen getroffen werden.

Aus der Druckschrift US 4,771,846 ist eine hydraulische Lenkvorrichtung bekannt. Die hydraulische Lenkvorrichtung wird über ein Proportionalventil mit einer Pumpe mit unter Druck stehender Hydraulikflüssigkeit versorgt. Durch von einem Lenkwinkelsensor aufgenommene Signale wird das Proportionalsystem mit Hilfe eines Elektromagneten angesteuert. Dabei wird das Proportionalventil so gesteuert, dass der vom Lenkwinkelsensor vorgegebene Wert an den gelenkten Rädern eingestellt wird. Nachteilig dabei ist, dass bei Ausfall des Proportionalventils die gesamte Lenkung ausfällt.

Aus der Druckschrift DE 35 36 563 C2 ist ein weiteres Lenksystem bekannt, bei dem die Bewegung eines Lenkhandrades über eine Schaltelektronik einen Elektromotor in Betrieb setzt. Der Elektromotor treibt eine Pumpe an, die mit Arbeitskammern eines Arbeitszylinders verbunden ist. Die Umlaufrichtung der Pumpe bestimmt dabei die Richtung, in die der Arbeitszylinder ausgelenkt wird. Auch dieses System ist nicht redundant und birgt die Gefahr des Gesamtausfalls.

Ferner ist aus der Druckschrift DE 40 11 947 A1 ein Lenksystem für zwei lenkbare Räder bekannt, bei dem die Räder unabhängig voneinander gelenkt werden können. Die einzelnen Räder werden über einen Servomotor angetrieben, der von einer elektronischen Regeleinheit versorgt wird. Auch hier besteht die Gefahr, dass bei Ausfall des Servomotors oder der elektrischen Regeleinheit das Fahrzeug nicht mehr lenkbar ist.

Aus der gattungsbildenden DE 42 41 849 A1 ist ein Lenksystem bekannt, das mit Hilfe mindestens zweier unabhängiger Regeleinheiten mindestens zwei unabhängige Motoren ansteuert. Durch eine Fehlerüberwachung und eine redundante Ausführung der Motoren wird ein sicherer Betrieb gewährleistet. Durch eine Fehlerüberwachungseinrichtung lässt sich eine defekte Regeleinheit von der Beeinflussung der Lenkelemente ausschließen. Nachteilig ist jedoch, dass durch eventuell nicht detektierte Fehler der Regeleinheiten eine fehlerhafte Lenkung ausgelöst wird.

Aufgabe der vorliegenden Erfindung ist es, ein "Drive By Wire"-System insbesondere zur Lenkung eines Fahrzeuges bereitzustellen, das im Falle eines sicherheitskritischen Fehlers in einer seiner Komponenten in einen betriebssicheren Zustand übergeht.

Gelöst wird diese Aufgabe durch das in Anspruch 1 angegebene System. Das erfindungsgemäße System umfasst demnach mindestens ein lenkbares Rad, ein Lenkrad oder eine dazu äquivalente Lenkeinrichtung, eine ungerade Mehrzahl von miteinander kommunizierenden Steuerrechnern, die jeweils mit mindestens einem eine Bewegung oder Betätigung des Lenkrades oder der Lenkeinrichtung erfassenden ersten Sensor und mindestens einem die Stellung des mindestens einen lenkbaren Rades direkt oder indirekt erfassenden zweiten Sensor verknüpft sind, eine erste Stelleinrichtung und eine zweite Stelleinrichtung, wobei die Stelleinrichtungen jeweils mit dem mindestens einen lenkbaren Rad mechanisch gekoppelt und jeweils durch einen der Steuerrechner steuerbar sind, einen ersten Mehrheitsentscheider, der der ersten Stelleinrichtung zugeordnet ist, sowie einen zweiten Mehrheitsentscheider, der der zweiten Stelleinrichtung zugeordnet ist, wobei jeder der Steuerrechner an den ersten Mehrheitsentscheider ein erstes Signal und an den zweiten Mehrheitsentscheider ein zu dem ersten Signal verschiedenes zweites Signal abgibt, wobei diejenige Stelleinrichtung durch ihren zugehörigen Steuerrechner aktiv steuerbar ist, deren zugehöriger Mehrheitsentscheider von den Steuerrechnem mehrheitlich das erste Signal erhält, und wobei die Steuerrechner durch Modellrechnungen unter Verwendung der von den Sensoren erfassten Messwerte den eigenen Zustand sowie den Zustand des Systems ermitteln und ein Umschalten von dem jeweils aktiven Steuerrechner auf den der anderen Stelleinrichtung zugeordneten Steuerrechner bewirken, falls die Systemfunktion Abweichungen von den Modellerwartungen einer Mehrheit der Steuerrechner zeigt.

Die sicherheitskritischen Komponenten des Systems sind somit redundant ausgeführt, wobei beim Ausfall einer Komponente automatisch auf eine entsprechende, fehlerfrei arbeitende Komponente umgeschaltet wird. Vorzugsweise ist in den Steuerrechnern eine Routine implementiert, die es dem jeweils steuernden Steuerrechner erlaubt, eine Umschaltforderung an die anderen Steuerrechner zu formulieren, wodurch diese ihre von den Mehrheitsentscheidern empfangenen Signale ändern, so daß ein anderer steuerbefähigter Steuerrechner die Kontrolle im System übernimmt, indem dieser andere Steuerrechner dann die ihm zugeordnete Stelleinrichtung steuert.

Eine bevorzugte Ausgestaltung des erfindungsgemäßen Systems besteht darin, daß die Steuerrechner über einen CAN-Bus miteinander kommunizieren. Dies ist von Vorteil, da ein CAN-Bus weitgehend fehlertolerant und CPU-unabhängig arbeitet.

Eine andere bevorzugte Ausgestaltung des erfindungsgemäßen Systems ist dadurch gekennzeichnet, daß die Stelleinrichtungen jeweils eine Hydrauliksteuerung mit einem doppeltwirkenden Lenkzylinder aufweisen, wobei die beiden Zylinderkammem des jeweiligen Lenkzylinders durch ein Lenkbypassventil miteinander verbindbar sind. Diese Ausgestaltung ermöglicht auf einfache und zuverlässige Weise eine Zuschaltung bzw. Abschaltung jeweils eines der redundant ausgeführten Lenkzylinder. Die Mehrheitsentscheider steuern dabei die Lenkbypassventile an und legen so fest, welcher Lenkhydraulikkreis jeweils aktiv ist.

Eine andere bevorzugte Ausgestaltung der Erfindung besteht darin, daß der jeweilige Druck in den beiden Zylinderkammem des doppeltwirkenden Lenkzylinders über ein Proportionalventil einstellbar ist, wobei an jeder der beiden Zylinderkammem ein eigener Drucksensor angeschlossen ist. Jedem Lenkzylinder ist dabei vorzugsweise eine eigene Pumpe zur Bereitstellung des erforderlichen Versorgungsdruckes zugeordnet.

Vorteilhaft ist es auch, wenn der Ausgang der Pumpe über ein Rückschlagventil mit einem Druckspeicher verbunden ist. Die Pumpe muß somit während des Betriebes des Fahrzeuges nicht kontinuierlich betrieben werden. So kann vorzugsweise ein Drucksensor zur Erfassung des Versorgungsdruckes vorgesehen sein, wobei die Pumpe bei Erreichen eines vorgegebenen Druckwertes über den aktiv steuernden Steuerrechner abgeregelt wird.

Ferner ist es vorteilhaft, wenn zwischen dem Ausgang der Pumpe und dem Rückschlagventil ein in einen Hydraulikfluid-Tank mündender Abzweig mit einem Pumpenbypassventil angeschlossen ist. Hierdurch ist es möglich, die Pumpe ohne Gegendruck vom System anlaufen zu lassen. Bei einer Elektropumpe können auf diese Art hohe Anlaufströme vermieden werden.

Eine weitere bevorzugte Ausgestaltung besteht darin, daß einer der Steuerrechner einen mit dem Lenkrad verbundenen Lenkmomentenmotor zur Simulation eines Rückstellmomentes steuert. Die Druckdifferenz zwischen den beiden Zylinderkammern des doppeltwirkenden Lenkzylinders dient dabei als Berechnungsgrundlage für das Rückstellmoment am Lenkrad.

Das erfindungsgemäße System kann in vorteilhafter Weise auch ein Bremssystem beinhalten. Nach einer bevorzugten Ausgestaltung umfaßt das System dann zusätzlich ein Bremspedalwerk, einen ersten Radbremszylinder und einen zweiten Radbremszylinder, die jeweils verschiedenen Bremskreisen angehören, welche jeweils eine Hydrauliksteuerung aufweisen, sowie eine der ungeraden Mehrzahl von Steuerrechnern entsprechende Anzahl von dritten Sensoren, die jeweils die Stellung des Bremspedals erfassen und jeweils mit einem der Steuerrechner verknüpft sind, so daß jedem Bremskreis ein anderer Steuerrechner zugeordnet ist, mit dem der zugehörige Bremskreis nach dem "Brake By Wire"-Prinzip steuerbar ist. Vorteilhaft ist dabei insbesondere, daß die für die Lenkung vorhandenen Steuerrechner und Mehrheitsentscheider sowie Teile der Hydraulik für das Bremssystem mitbenutzt werden können.

Vorzugsweise ist das Bremssystem in zwei voneinander unabhängige Bremskreise gegliedert, wobei jeder Bremskreis jeweils zwei Radbremszylinder aufweist, von denen der eine Radbremszylinder einem Vorderrad und der andere Radbremszylinder einem auf der gegenüberliegenden Fahrzeugseite befindlichen Hinterrad zugeordnet ist.

Weitere bevorzugte und vorteilhafte Ausgestaltungen des erfindungsgemäßen Systems sind in den Unteransprüchen angegeben.

Nachfolgend wird die Erfindung anhand einer ein Ausführungsbeispiel darstellenden Zeichnung näher erläutert. Im einzelnen zeigen:

Fig. 1      eine schematische Darstellung eines erfindungsgemäßen Systems zur elektrohydraulischen Lenkung und Bremsung eines Fahrzeuges nach dem "Drive By Wire"-Prinzip,

Fig. 2      eine schematische Darstellung der Komponenten der in dem System gemäß Fig. 1 verwendeten Lenkhydraulik,

und

Fig. 3    eine schematische Darstellung der Komponenten der in dem System gemäß Fig. 1 verwendeten Bremshydraulik.

Das in der Zeichnung schematisch dargestellte "Drive By Wire"-System besteht aus zwei Subsystemen, nämlich einer Lenkung und einem Bremssystem. Aus funktionaler Sicht lassen sich somit die Subsysteme "Steer By Wire" und "Brake By Wire" unterscheiden. Die Aktoren für Lenkung und Bremse sind jeweils doppelt ausgeführt, so daß beim Ausfall des einen Aktors auf den anderen umgeschaltet werden kann.

Mittelpunkt des dargestellten Systems bilden drei miteinander kommunizierende Steuerrechner 1, 2, 3 und zwei Mehrheitsentscheider 4, 5, die auch als "Voter" bezeichnet werden. Jeder der Steuerrechner 1, 2, 3 ist mit eigenen Sensoren 6, 9, 12; 7, 10, 13; 8, 11, 14 für die Aufnahme der durch den Fahrer über das Lenkrad bzw. das Bremspedal vorgenommenen Steuerung und für die Aufnahme des Einschlagwinkels der Räder ausgestattet. Ferner sind Sensoren (nicht gezeigt) für die Aufnahme des Energieversorgungszustandes vorhanden. Dabei weist jeder der Steuerrechner auch eine eigene Notstromversorgung auf. Zur Kommunikation zwischen den Steuerrechnern 1, 2, 3 dient ein CAN-Bus 15, der weitgehend fehlertolerant und CPU-unabhängig arbeitet.

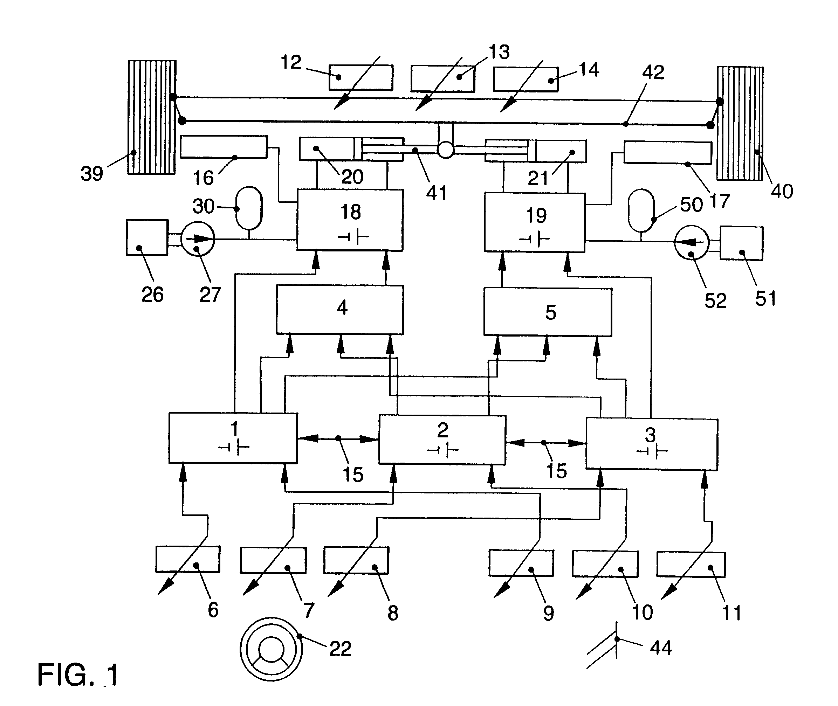

Die Steuerrechner 1 und 3 besitzen die Kontrolle über einen eigenen Lenk- und Bremshydraulikkreis. Hinsichtlich der Lenkung ist entweder nur der Kreis von Steuerrechner 1 oder nur der von Steuerrechner 3 aktiv, wohingegen die Bremse immer zweikreisig benutzt wird. Der Steuerrechner 1 kontrolliert die Radbremszylinder vorne links (Bezugszeichen 16) und hinten rechts (in Fig. 1 nicht gezeigt), während der Steuerrechner 3 entsprechend die Radbremszylinder vorne rechts (Bezugszeichen 17) und hinten links (in Fig. 1 nicht gezeigt) kontrolliert, so daß im Falle des Versagens eines Bremskreises dennoch eine grundsätzliche Bremsfunktion gewährleistet ist. Die Bezugszeichen 18 und 19 bezeichnen jeweils eine Hydrauliksteuerung, an der neben den Radbremszylindern eines Bremskreises jeweils ein doppeltwirkender Lenkzylinder 20 bzw. 21 angeschlossen ist.

Der Steuerrechner 2 dient einerseits als Kontrollrechner für die beiden steuerfähigen Rechner 1 und 3 und ermöglicht damit erst eine Mehrheitsentscheidung in dem Voter 4 bzw. 5. Andererseits steuert er einen Lenkmomentenmotor, mit dem am Lenkrad 22 ein Rückstellmoment simuliert wird.

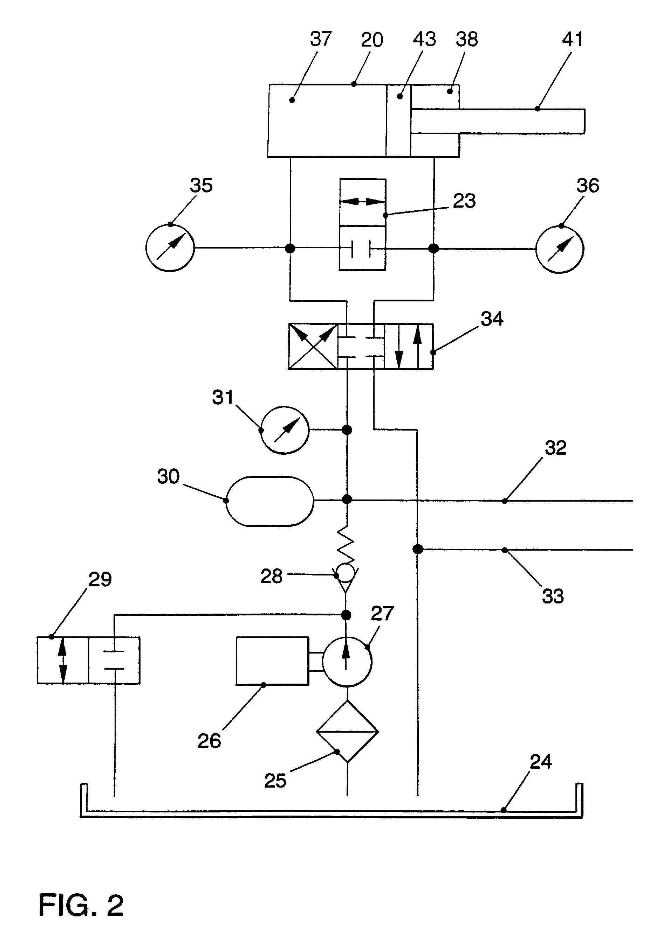

Die Mehrheitsentscheider (Voter) 4, 5 steuern Lenkbypassventile 23 an (vgl. Fig. 2) und legen so fest, welcher Lenkhydraulikkreis gerade aktiv ist. Jeder der beiden Mehrheitsentscheider 4, 5 erhält von jedem der drei Steuerrechner 1, 2, 3 ein 1-bit Eingangssignal. Aus Sicht des jeweiligen Steuerrechners i sind die beiden Signale, die er an die Mehrheitsentscheider 4, 5 ausgibt, invers zueinander, d.h., er gibt entweder an den Mehrheitsentscheider 4 ein low-Signal ($E_{1i} = 0$) und an den Mehrheitsentscheider 5 ein high-Signal ($E_{2i} := \neg E_{1i} = 1$) oder umgekehrt. Daher werden im folgenden die ersten Indizes (i) weggelassen.

Entsprechend ihrer Eingangsgrößen $E_1$ bis $E_3$ bzw. $\neg E_1$ bis $\neg E_3$ bestimmen die Mehrheitsentscheider 4, 5 ihr Ausgangssignal $A_1$ bzw. $A_2$ nach folgenden Gleichungen:

$$A_1 := (E_1 \wedge E_2) \vee (E_2 \wedge E_3) \vee (E_1 \wedge E_3)$$

$$A_2 := (\neg E_1 \wedge \neg E_2) \vee (\neg E_2 \wedge \neg E_3) \vee (\neg E_1 \wedge \neg E_3)$$

Es ist also jeweils der Lenkhydraulikkreis aktiv, dessen zugehöriger Mehrheitsentscheider 4 bzw. 5 von mindestens zwei Steuerrechnern ein high-Signal erhält. Durch den Austausch von Statusdaten über den CAN-Bus 15 kann jeder Steuerrechner bestimmen, welcher Rechner von ihnen gerade aktiv steuert.

Die Steuerrechner 1, 2, 3 bestehen vorzugsweise aus Mikrocontrollern. Die Steuerungssoftware enthält eine Plausibilitätsprüfung, die Fehler in den Aktoren identifiziert. Dazu wird der Fahrerwunsch, d.h. der vom Fahrer über das Lenkrad und/oder das Bremspedal ausgeübte Steuerungsbefehl, einerseits an die jeweilige Aktorik weitergeleitet und andererseits in Modellrechnungen in den Steuerungsrechnern verwendet. Die von den Modellrechnungen gelieferten Werte werden mit den Meßwerten der Aktorik verglichen. Befinden sich die Meßwerte der Aktorik innerhalb eines vorgebbaren Toleranzbandes, so ist die Aktorik funktionsfähig.

Die Steuerungssoftware ist so ausgelegt, daß sie einen auftretenden Fehler hinsichtlich seiner Wirkung auf das Gesamtsystem klassifiziert, d.h. es wird festgestellt, ob der oder die Fehler tolerierbar sind oder die Betriebssicherheit des Fahrzeuges gefährden.

Die Reaktion auf tolerierbare Fehler kann z.B. eine Beobachtung und/oder Aufzeichnung des Fehlers, eine Rückführung in einen bekannten fehlerfreien Vorherzustand oder die Berechnung eines fehlerfreien Folgezustandes anhand eines Modells sein.

Die Steuerrechner 1, 2, 3 arbeiten mit Algorithmen zur Überprüfung bzw. Bewertung des aktuellen Zustandes des Fahrzeuges sowie des "Drive-By-Wire"-Systems. Die Überprüfung umfaßt insbesondere Testroutinen für die Aktoren, die Sensorik und die Spannungsversorgung.

In den Steuerrechnern 1, 2, 3 ist jeweils ein Maßnahmenkatalog gespeichert, der die Reaktionen auf alle erkennbaren Erstfehler definiert. Das erfindungsgemäße System ist so ausgelegt, daß bei einem sicherheitskritischen Fehler ein sicherer Übergang in einen sicheren Zustand noch möglich ist. Dieser sichere Zustand kann unter Umständen nur erreicht werden, wenn bei Auftreten eines fatalen Fehlers, d.h. eines die Betriebssicherheit gefährdenden Fehlers, neben optischen und/oder akustischen Hinweisen an den Fahrer das Fahrtende durch aktive Eingriffe, wie z.B. eine Fahrzeugverzögerung durch stetiges, langsames Abbremsen, forciert wird.

Vorzugsweise ist in der Steuersoftware eine Routine implementiert, die es dem steuernden Rechner 1 oder 3 erlaubt, eine Umschaltfunktion an die beiden anderen Steuerrechner 2, 3 bzw. 1, 2 zu formulieren. Dies erwirkt die Modifizierung ihrer Votersignale, so daß der andere steuerbefähigte Rechner (1 bzw. 3) die Kontrolle übernimmt. Dies ist notwendig für die erwähnten Hydraulik-Testroutinen, die in jeder Fahrtpause durchgeführt werden. Die Erkennung einer Fahrtpause und des Fahrtendes beruht ebenfalls auf einer Mehrheitsentscheidung und wird vom jeweils steuernden Rechner initiiert.

Aus den von den Sensoren aufgenommenen Meßwerten und den oben erwähnten Modellrechnungen, die z.B. hinsichtlich der Lenkung die Beziehung zwischen Lenkrad- und Radeinschlagwinkel gegenüber den Drücken in den Lenkzylinderkammern betrachten, kann jeder Steuerrechner den eigenen Zustand sowie den des Systems bestimmen. Stellen mindestens zwei Steuerrechner fest, daß die Systemfunktion Abweichungen von ihren Modellerwartungen zeigt, so können sie durch Änderung ihrer Signale an die Mehrheitsentscheider (Voter) 4, 5 eine Suspendierung des gerade aktiv steuernden Rechners und damit das Umschalten auf den zweiten Lenkhydraulikkreis erzwingen.

Nachfolgend werden der Aufbau und die Funktion der Subsysteme "Steer By Wire" und "Brake By Wire" näher erläutert.

Das Subsystem "Steer By Wire" umfaßt ein Lenkradmodul und eine Lenkhydraulik. Das Lenkradmodul besteht dabei aus dem Lenkrad 22, dem Lenkmomentenmotor (nicht gezeigt) und drei Sensoren 6, 7, 8, die jeweils den Lenkradwinkel erfassen.

Die Lenkhydraulik des jeweiligen Lenkhydraulikkreises gliedert sich in zwei Teile (vgl. Fig. 2). Der erste Teil dient der Bereitstellung des Versorgungsdruckes und besteht aus einem Hydraulikfluid-Tank 24, einem Filter 25, einer von einem Elektromotor 26 angetriebenen Pumpe 27, einem Rückschlagventil 28, einem Pumpenbypassventil (2/2 Wegeventil) 29, einem Speicher 30 und einem Drucksensor 31 zur Messung des Versorgungsdruckes.

Die Pumpe 27 fördert aus dem Tank 24 Hydraulikfluid über das Rückschlagventil 28 in den Speicher 30. Wird ein vorgegebener maximaler Versorgungsdruck erreicht, so wird die Pumpe 27 über eine geeignete Software abgeregelt. Bei Unterschreitung eines vorgegebenen minimalen Versorgungsdruckes wird die Pumpe 27 wieder eingeschaltet. Das Rückschlagventil 28 verhindert den Abbau des Druckes in Richtung Tank 24. Das Pumpenbypassventil 29 dient im offenen Zustand dazu, die Pumpe 27 ohne Gegendruck vom System anlaufen zu lassen. Der im Speicher 31 aufgebaute Versorgungsdruck wird sowohl für die Lenkung als auch für die Bremse genutzt. Die in Fig. 2 mit dem Bezugszeichen 32 versehene Leitung führt daher zur Bremshydraulik, während das Bezugszeichen 33 die Rücklaufleitung von der Bremshydraulik zum Tank 24 bezeichnet.

Der zweite Teil der Lenkhydraulik besteht aus einem doppeltwirkenden Lenkzylinder 20, einem Proportionalventil (3/4 Wegeventil) 34, einem Lenkbypassventil (2/2 Wegeventil) 23 und zwei Drucksensoren 35, 36, die jeweils an einer der beiden Zylinderkammern 37, 38 des Lenkzylinders 20 angeschlossen sind.

Außerdem sind drei Sensoren 12, 13, 14 für die Erfassung des Radeinschlagwinkels vorhanden (vgl. Fig. 1). Die Sensoren 12, 13, 14 erfassen dabei den Einschlagwinkel der Räder 39, 40 indirekt, indem sie die Stellung der Lenkzylinderkolbenstange 41, einer Spurstange 42 oder einer Lenkstange aufnehmen.

Ist das Lenkbypassventil 23 geschlossen, kann über das Proportionalventil 34 in jeder der beiden Lenkzylinderkammern 37, 38 gezielt ein Druck aufgebaut werden. Je nach Differenz dieser beiden Drücke bewegt sich die Kolbenstange 41 des Lenkzylinders 20 nach links oder nach rechts und führt so die Lenkbewegung an den Rädern 39, 40 durch. Die Druckdifferenz zwischen den beiden Lenkzylinderkammern 37, 38 bildet die Berechnungsgrundlage für das über den Lenkmomentenmotor am Lenkrad 22 erzeugte Rückstellmoment. Da der Steuerrechner 2 die Druckdifferenz nicht selbst erfaßt, wird dieser Wert über den CAN-Bus 15 übertragen.

Über das erzeugte Rückstellmoment wird dem Fahrer ein von der jeweiligen Fahrsituation abhängiges Fahrgefühl vermittelt. So ist z.B. bei einer Fahrt auf einer glatten, rutschigen Straße das Rückstellmoment am Lenkrad 22 deutlich geringer als bei einer Fahrt auf einer relativ rauhen bzw. trockenen Straße. Es ist somit möglich, auf taktile Weise den Fahrer über das vom Lenkmomentenmotor am Lenkrad 22 erzeugte Rückstellmoment auf sich anbahnende kritische Fahrsituationen aufmerksam zu machen. Zur Erfassung solcher Situationen können verschiedene Sensoren verwendet werden, insbesondere Drucksensoren, Temperatursensoren, Schlupfsensoren und/oder optische Sensoren.

Durch Öffnen des Lenkbypassventils 23 wird die Druckdifferenz zwischen den beiden Zylinderkammern 37, 38 ausgeglichen. Auf diese Weise wird der betreffende Lenkzylinder passiv geschaltet. Der andere Lenkzylinder übernimmt in diesem Fall die Einstellung des Radeinschlagwinkels, während der über seine zugehörige Kolbenstange 41 mechanisch mit der Spurstange 42 verbundene Kolben 43 des passiv geschalteten Lenkzylinders kraftlos mitläuft.

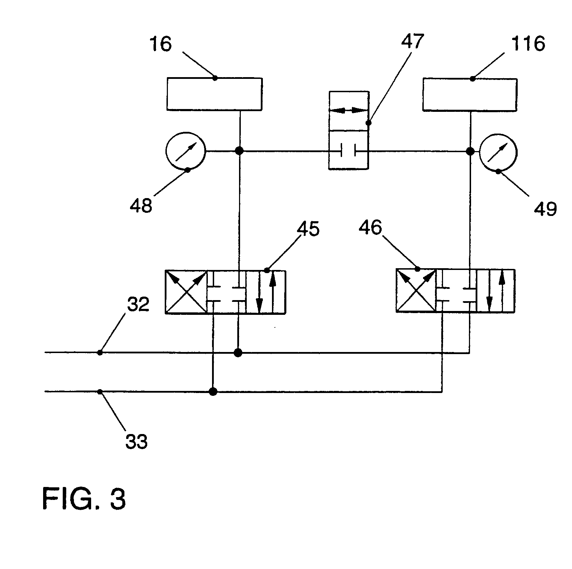

Das Subsystem "Brake By Wire" setzt sich aus einem Bremspedalwerk und einer Bremshydraulik zusammen (vgl. Figuren 1 und 3).

Das Bremspedalwerk simuliert über Federn den Gegendruck einer konventionellen Bremshydraulik. Entsprechend der Stellung des Bremspedals 44 drük-

ken drei aufeinander abgestimmte Federn (nicht gezeigt) gegen das Bremspedal 44. Dadurch wird dem Fahrer das von einer konventionellen Bremshydraulik gewohnte Bremsgefühl vermittelt.

Die jeweils einem der beiden Steuerrechner 1, 3 zugeordnete Bremshydraulik (vgl. Fig. 3) umfaßt zwei Radbremszylinder, und zwar vorne links (16) und hinten rechts (116) bzw. vorne rechts und hinten links, zwei Proportionalventile (3/3 Wegeventile) 45, 46, die jeweils einem der Radbremszylinder 16, 116 zugeordnet sind, ein Bremsbypassventil (2/2 Wegeventil) 47, über das die Zylinderkammem der Radbremszylinder 16, 116 miteinander verbindbar sind, und zwei an den Zylinderkammem der Radbremszylinder 16, 116 angeschlossene Drucksensoren 48, 49.

Zusätzlich werden über zwei Sensoren (nicht gezeigt) die Raddrehzahlen erfaßt. Diese Sensoren sind Teil eines Antiblockiersystems und/oder einer Antischlupfregelung.

Ist das Bremsbypassventil 47 geschlossen, kann über die Proportionalventile 45, 46 in jedem der Radbremszylinder 16, 116 ein unterschiedlicher Druck aufgebaut werden. Die Drucksensoren 48, 49 nehmen diese Drücke auf. Durch die getrennte Ansteuerung aller vier Radbremszylinder durch beide Steuerrechner 1, 3 kann ein Antiblockiersystem realisiert werden.

Ist das Bremsbypassventil 47 dagegen geöffnet, so findet zwischen den beiden Radbremszylindem 16, 116 ein Druckausgleich statt, d.h. beide Räder (Vorderrad und Hinterrad) werden gleich stark abgebremst. Diese Eigenschaft wird in Testroutinen genutzt, um die beiden Drucksensoren 48, 49 mit dem Versorgungsdrucksensor 31 (vgl. Fig. 2) auf unzulässige Abweichungen hin zu überprüfen.

Die Erfindung ist nicht auf das in der Zeichnung dargestellte und vorstehend beschriebene Ausführungsbeispiel beschränkt. Vielmehr ist eine Anzahl von Varianten denkbar, die von dem Erfindungsgedanken auch bei abweichender Gestaltung Gebrauch machen. So kann das erfindungsgemäße System beispielsweise auch Mittel aufweisen, mit denen die Übersetzung zwischen Lenkradbewegung und Lenkbewegung der Räder 39, 40 eingestellt werden kann. Die Übersetzung kann dann je nach Fahrsituation, z.B. für einen Einparkvorgang oder eine Autobahnfahrt variiert werden.

Femer ist es zweckmäßig, das System mit einer elektronischen Wegfahrsperre zu kombinieren, da ein herkömmliches Lenkradschloß aufgrund der mechanischen Entkopplung von Lenkrad 22 und lenkbaren Rädern 39, 40 entfallen kann.

### BEZUGSZEICHENLISTE

| | |
|---|---|
| 1 | Steuerrechner |
| 2 | Steuerrechner |
| 3 | Steuerrechner |
| 4 | Mehrheitsentscheider (Voter) |
| 5 | Mehrheitsentscheider (Voter) |
| 6 | Sensor für Erfassung des Lenkradwinkels |
| 7 | Sensor für Erfassung des Lenkradwinkels |
| 8 | Sensor für Erfassung des Lenkradwinkels |
| 9 | Sensor für Erfassung der Bremspedalstellung |
| 10 | Sensor für Erfassung der Bremspedalstellung |
| 11 | Sensor für Erfassung der Bremspedalstellung |
| 12 | Sensor für Erfassung des Radeinschlagwinkels |
| 13 | Sensor für Erfassung des Radeinschlagwinkels |
| 14 | Sensor für Erfassung des Radeinschlagwinkels |
| 15 | CAN-Bus |
| 16 | vorderer Radbremszylinder |
| 17 | vorderer Radbremszylinder |
| 18 | Hydrauliksteuerung |
| 19 | Hydrauliksteuerung |
| 20 | Lenkzylinder |
| 21 | Lenkzylinder |
| 22 | Lenkrad |
| 23 | Lenkbypassventil |
| 24 | Hydraulikfluid-Tank |
| 25 | Filter |
| 26 | Elektromotor |
| 27 | Pumpe |
| 28 | Rückschlagventil |
| 29 | Pumpenbypassventil |
| 30 | Speicher |
| 31 | Versorgungsdrucksensor |
| 32 | Leitung zur Bremshydraulik |
| 33 | Rücklaufleitung |
| 34 | Proportionalventil |
| 35 | Drucksensor |
| 36 | Drucksensor |
| 37 | Lenkzylinderkammer |
| 38 | Lenkzylinderkammer |
| 39 | Rad |
| 40 | Rad |
| 41 | Lenkzylinderkolbenstange |
| 42 | Spurstange |
| 43 | Lenkzylinderkolben |
| 44 | Bremspedal |
| 45 | Proportionalventil |
| 46 | Proportionalventil |
| 47 | Bremsbypassventil |
| 48 | Drucksensor |
| 49 | Drucksensor |
| 50 | Speicher |
| 51 | Elektromotor |
| 52 | Pumpe |
| 116 | hinterer Radbremszylinder |

### Patentansprüche

1. System zur Steuerung von Fahrzeugkomponenten, insbesondere zur Lenkung eines Fahrzeuges nach dem "Drive By Wire"-Prinzip, mit mindestens einem lenkbaren Rad (39,40), einem Lenkrad (22) oder einer dazu äquivalenten Lenkeinrichtung, einer ungeraden Mehrzahl von miteinander kommunizierenden Steuerrechnem (1,2,3), die jeweils mit mindestens einem eine Bewegung oder Betätigung des Lenkrades (22) oder der Lenkeinrichtung erfassenden ersten Sensor (6,7,8) und mindestens einem die Stellung des mindestens einen lenkbaren Rades (39,40) erfassenden zweiten Sensor (12,13,14) verknüpft sind, einer ersten Stelleinrichtung (18,20) und einer zweiten Stelleinrichtung (19,21), wobei die Steuerrechner (1,2,3) durch Modellrechnungen unter Verwendung der von den Sensoren (6,7,8; 12,13,14) erfassten Messwerte den eigenen Zustand sowie den Zustand des Systems ermitteln und ein Umschalten von dem jeweils aktiven Steuerrechner auf den der anderen Stelleinrichtung zugeordneten Steuerrechner bewirken, falls die Systemfunktion Abweichungen von den Modellerwartungen einer Mehrheit der Steuerrechner (1,2,3) zeigt,

**gekennzeichnet durch**

einen ersten Mehrheitsentscheider (4), der der ersten Stelleinrichtung (18,20) zugeordnet ist, sowie einen zweiten Mehrheitsentscheider (5), der der zweiten Stelleinrichtung (19,21) zugeordnet ist, wobei jeder der Steuerrechner (1,2,3) an den ersten Mehrheitsentscheider (4) ein erstes Signal und an den zweiten Mehrheitsentscheider (5) ein zu dem ersten Signal verschiedenes zweites Signal abgibt, wobei die Stelleinrichtungen (18,20;19,21) jeweils mit dem mindestens einem lenkbaren Rad (39,40) mechanisch gekoppelt und jeweils **durch** einen der Steuerrechner steuerbar sind, wobei diejenige Stelleinrichtung **durch** ihren zugehörigen Steuerrechner aktiv steuerbar ist, deren zugehöriger Mehrheitsentscheider von den Steuerrechnern (1,2,3) mehrheitlich das erste Signal erhält.

2. System nach Anspruch 1, **dadurch gekennzeichnet, daß** die Steuerrechner (1,2,3) über einen CAN-Bus (15) miteinander kommunizieren.

3. System nach Anspruch 1 oder 2, **dadurch gekennzeichnet, daß** die Steuerrechner (1,2,3) über die ersten Sensoren (6,7,8) den jeweiligen Lenkradwinkel erfassen.

4. System nach einem der Ansprüche 1 bis 3, **dadurch gekennzeichnet, daß** die Stelleinrichtungen (18,20;19,21) jeweils eine Hydrauliksteuerung (18,19) mit einem doppeltwirkenden Lenkzylinder (20,21) aufweisen.

5. System nach Anspruch 4, **dadurch gekennzeichnet, daß** die beiden Zylinderkammern (37,38) des doppeltwirkenden Lenkzylinders (20) durch ein Lenkbypassventil (23) miteinander verbindbar sind.

6. System nach Anspruch 4 oder 5, **dadurch gekennzeichnet, daß** der jeweilige Druck in den beiden Zylinderkammem (37,38) des doppeltwirkenden Lenkzylinders (20) über ein Proportionalventil (34) einstellbar ist.

7. System nach einem der Ansprüche 4 bis 6, **dadurch gekennzeichnet, daß** an jeder der beiden Zylinderkammem (37,38) des doppeltwirkenden Lenkzylinders (20) ein eigener Drucksensor (35,36) angeschlossen ist.

8. System nach einem der Ansprüche 4 bis 7, **dadurch gekennzeichnet, daß** der Hydrauliksteuerung (18,19) eine eigene Pumpe (27,52) zur Bereitstellung des Versorgungsdruckes zugeordnet ist.

9. System nach Anspruch 8, **dadurch gekennzeichnet, daß** der Ausgang der Pumpe (27,52) über ein Rückschlagventil (28) mit einem Druckspeicher (30,50) verbunden ist.

10. System nach Anspruch 8 oder 9, **dadurch gekennzeichnet, daß** mindestens ein Drucksensor (31) zur Erfassung des Versorgungsdruckes vorgesehen ist, wobei die Pumpe (27,52) in Abhängigkeit des erfaßten Druckwertes über den aktiv steuemden Steuerrechner (1 bzw. 3) abgeregelt wird.

11. System nach Anspruch 9 oder 10, **dadurch gekennzeichnet, daß** zwischen dem Ausgang der Pumpe (27) und dem Rückschlagventil ( 28) ein in einen Hydraulikfluid-Tank (24) mündender Abzweig mit einem Pumpenbypassventil (29) angeschlossen ist.

12. System nach einem der Ansprüche 1 bis 11, **dadurch gekennzeichnet, daß** einer (2) der Steuerrechner einen mit dem Lenkrad (22) verbundenen Lenkmomentenmotor zur Simulation eines Rückstellmomentes steuert.

13. System nach einem der Ansprüche 4 bis 11 und Anspruch 12, **dadurch gekennzeichnet, daß** anhand der Druckdifferenz zwischen den beiden Zylinderkammem (37,38) des doppeltwirkenden Lenkzylinders (20) das vom Lenkmomentenmotor am Lenkrad (22) zu erzeugende Rückstellmoment berechnet wird.

14. System nach einem der Ansprüche 1 bis 13, **dadurch gekennzeichnet, daß** die Steuerrechner (1,2,3) und die daran angeschlossenen Sensoren (6 bis 14) mit einer unabhängigen Energieversorgungseinrichtung ausgerüstet sind.

15. System nach einem der Ansprüche 1 bis 14, **dadurch gekennzeichnet, daß** in den Steuerrechnern (1,2,3) eine Routine implementiert ist, die es dem jeweils steuernden Steuerrechner erlaubt, eine Umschaltforderung an die anderen Steuerrechner zu formulieren, wodurch diese ihre von den Mehrheitsentscheidern (4,5) empfangenen Signale ändern, so daß ein anderer steuerbefähigter Steuerrechner die Kontrolle im System übernimmt, indem dieser andere Steuerrechner dann die ihm zugeordnete Stelleinrichtung steuert.

16. System nach einem der Ansprüche 1 bis 15, desweiteren umfassend:

ein Bremspedalwerk, mindestens einen ersten Radbremszylinder und mindestens einen zweiten Radbremszylinder, die jeweils verschiedenen Bremskreisen angehören, welche jeweils eine Hydrauliksteuerung (18,19) aufweisen, sowie eine der ungeraden Mehrzahl von Steuerrechnern (1,2,3) entsprechende Anzahl von dritten Sensoren (9,10,11), die jeweils die Stellung des Bremspedals (44) erfassen und jeweils mit einem der Steuerrechner (1,2,3) verknüpft sind, wobei jedem Bremskreis ein anderer Steuerrechner (1 bzw. 3) zugeordnet ist, mit dem der zugehörige Bremskreis nach dem "Brake By Wire"-Prinzip steuerbar ist.

17. System nach Anspruch 16, **dadurch gekennzeichnet, daß** zwei voneinander unabhängige Bremskreise vorhanden sind, wobei jeder Bremskreis jeweils zwei Radbremszylinder (16,116) aufweist, von denen der eine Radbremszylinder (16) einem Vorderrad und der andere Radbremszylinder (116) einem auf der gegenüberliegenden Fahrzeugseite befindlichen Hinterrad zugeordnet ist.

18. System nach Anspruch 17, **dadurch gekennzeichnet, daß** die Zylinderkammern der beiden Radbremszylinder (16,116) eines Bremskreises jeweils über ein eigenes Proportionalventil (45, 46) mit der Pumpe (27) oder einem Rücklauf (33) zu einem Hydraulikfluid-Tank (24) verbindbar sind.

19. System nach Anspruch 17 oder 18, **dadurch gekennzeichnet, daß** die Zylinderkammern der beiden Radbremszylinder (16,116) eines Bremskreises durch ein Bremsbypassventil (47) miteinander verbindbar sind.

20. System nach einem der Ansprüche 17 bis 19, **dadurch gekennzeichnet, daß** an der Zylinderkammer des jeweiligen Radbremszylinders (16,116) ein eigener Drucksensor (48,49) angeschlossen ist.

21. System nach einem der Ansprüche 16 bis 20, **dadurch gekennzeichnet, daß** das Bremspedalwerk mindestens eine Feder zur Simulation des Gegendrucks einer herkömmlichen Bremshydraulik aufweist.

### Claims

1. System for controlling vehicle components, in particular for steering a vehicle according to the "dry-by-wire" principle, having at least one steerable wheel (39, 40), a steering wheel (22) or a steering device which is equivalent thereto, an uneven number of control computers (1, 2, 3) which communicate with one another and which are logically linked to at least one first sensor (6, 7, 8) which senses a movement or activation of the steering wheel (22) or of the steering device and to at least one second sensor (12, 13, 14) which senses the position of the at least one steerable wheel (39, 40), a first actuating device (18, 20) and a second actuating device (19, 21), the control computers (1, 2, 3) determining their own state and the state of the system by means of model calculations using the measured values sensed by the sensors (6, 7, 8; 12, 13, 14), and bringing about switching over from the respectively active control computer to the control computer assigned to the other actuating device if the system function exhibits deviations from the model expectations of a majority of the control computers (1, 2, 3) **characterized by** a first majority decision element (4) which is assigned to the first actuating device (18, 20), and a second majority decision element (5) which is assigned to the second actuating device (19, 21), each of the control computers (1, 2, 3) outputting a first signal to the first majority decision element (4) and a second signal which is different from the first signal to the second majority decision element (5), the actuating devices (18, 20; 19, 21) each being mechanically coupled to the at least one steerable wheel (39, 40) and each being controllable by one of the control computers, it being possible for that actuating device whose associated majority decision element receives the first signal from the control computers (1, 2, 3) to the greatest extent to be actively controlled by its associated control computer.

2. System according to Claim 1, **characterized in that** the control computers (1, 2, 3) communicate with one another via a CAN bus (15).

3. System according to Claim 1 or 2, **characterized in that** the control computers (1, 2, 3) sense the respective steering wheel angle by means of the first sensors (6, 7, 8).

4. System according to one of Claims 1 to 3, **characterized in that** the actuating devices (18, 20; 19, 21) each have a hydraulic controller (18, 19) with a double-acting steering cylinder (20, 21).

5. System according to Claim 4, **characterized in that** the two cylinder chambers (37, 38) of the double-acting steering cylinder (20) can be connected to one another by means of a steering bypass valve (23).

6. System according to Claim 4 or 5, **characterized in that** the respective pressure in the two cylinder chambers (37, 38) of the double-acting steering cylinder (20) can be set by means of a proportional valve (34).

7. System according to one of Claims 4 to 6, **characterized in that** a separate pressure sensor (35, 36) is connected to each of the two cylinder chambers (37, 38) of the double-acting steering cylinder (20).

8. System according to one of Claims 4 to 7, **characterized in that** the hydraulic controller (18, 19) is assigned a separate pump (27, 52) for making available the supply pressure.

9. System according to Claim 8, **characterized in that** the output of the pump (27, 52) is connected to a pressure accumulator (30, 50) via a non-return valve (28).

10. System according to Claim 8 or 9, **characterized in that** at least one pressure sensor (31) is provided for sensing the supply pressure, the setting of the pump (27, 52) being decreased as a function of the sensed pressure value by means of the actively controlling control computer (1 and 3, respectively).

11. System according to Claim 9 or 10, **characterized in that** a branch which leads into a hydraulic fluid tank (24) and has a pump bypass valve (29) is connected between the output of the pump (27) and the non-return valve (28).

12. System according to one of Claims 1 to 11, **characterized in that** one (2) of the control computers controls a steering torque motor which is connected to the steering wheel (22) and has the purpose of simulating a restoring torque.

13. System according to one of Claims 4 to 11 and Claim 12, **characterized in that** the restoring torque to be generated at the steering wheel (22) by the steering torque motor is calculated on the basis of the pressure difference between the two cylinder chambers (37, 38) of the double-acting steering cylinder (20).

14. System according to one of Claims 1 to 13, **char-**

**acterized in that** the control computers (1, 2, 3) and the sensors (6 to 14) which are connected thereto are equipped with an independent power supply device.

15. System according to one of Claims 1 to 14, **characterized in that** a routine which permits the respectively controlling control computer to formulate a switch-over to the other control computers is implemented in the control computers (1, 2, 3) as a result of which said other control computers change their signals which are received by the majority decision elements (4, 5) so that another control-enabled control computer performs the monitoring in the system by this other control computer then controlling the actuating device assigned to it.

16. System according to one of Claims 1 to 15, also comprising:

a brake pedal mechanism, at least one first wheel brake cylinder and at least one second wheel brake cylinder which are each associated with different brake circuits which each have a hydraulic controller (18, 19) and a number of third sensors (9, 10, 11) which corresponds to the uneven number of control computers (1, 2, 3) and which each sense the position of the brake pedal (44) and are each logically linked to one of the control computers (1, 2, 3), each brake circuit being assigned another control computer (1 or 3, respectively) which can be used to control the associated brake circuit according to the "brake-by-wire" principle.

17. System according to Claim 16, **characterized in that** two brake circuits which are independent of one another are provided, each brake circuit having, in each case, two wheel brake cylinders (16, 116), the one wheel brake cylinder (16) of which is assigned to a front wheel, and the other wheel brake cylinder (116) of which is assigned to a rear wheel located on the opposite side of the vehicle.

18. System according to Claim 17, **characterized in that** the cylinder chambers of the two wheel brake cylinders (16, 116) of a brake circuit can each be connected to the pump (27) or to a return flow (33) to a hydraulic fluid tank (24) via a separate proportional valve (45, 46).

19. System according to Claim 17 or 18, **characterized in that** the cylinder chambers of the two wheel brake cylinders (16, 116) of a brake circuit can be connected to one another by means of a brake bypass valve (47).

20. System according to one of Claims 17 to 19, **char-**

**acterized in that** a separate pressure sensor (48, 49) is connected to the cylinder chamber of the respective wheel brake cylinder (16, 116).

21. System according to one of Claims 16 to 20, **characterized in that** the brake pedal mechanism has at least one spring for simulating the counterpressure of a conventional brake hydraulic system.

**Revendications**

1. Système pour commander des composants de véhicules, en particulier pour la direction d'un véhicule selon le principe de la conduite par fil, comprenant au moins une roue dirigeable (39, 40), un volant de direction (22) ou un dispositif de direction équivalent, une pluralité impaire d'organes de calcul (1, 2, 3) communiquant les uns avec les autres, lesquels sont reliés à chaque fois à au moins un premier capteur (6, 7, 8) détectant un mouvement un ou actionnement du volant de direction (22) ou du dispositif de direction et à au moins un deuxième capteur (12, 13, 14) détectant la position de l'au moins une roue dirigeable (39, 40), un premier dispositif de commande (18, 20) et un deuxième dispositif de commande (19, 21), les organes de calcul (1, 2, 3) détectant, par des calculs basés sur des modèles, en utilisant les valeurs de mesure détectées par les capteurs (6, 7, 8 ; 12, 13, 14), leur propre état ainsi que l'état du système, et effectuant une commutation de l'organe de calcul actif respectif à l'organe de calcul associé à l'autre dispositif de commande au cas où le fonctionnement du système présente des écarts par rapport aux prédictions basées sur des modèles d'une pluralité des organes de calcul (1, 2, 3),
**caractérisé par**
une première unité de vote majoritaire (4), qui est associée au premier dispositif de commande (18, 20), ainsi qu'une deuxième unité de vote majoritaire (5) qui est associée au deuxième dispositif de commande (19, 21), chacun des organes de calcul (1, 2, 3) délivrant à la première unité de vote majoritaire (4) un premier signal et à la deuxième unité de vote majoritaire (5) un deuxième signal différent du premier signal, les dispositifs de commande (18, 20 ; 19, 21) étant chacun accouplés mécaniquement à l'au moins une roue dirigeable (39, 40) et étant chacun commandables par l'un des organes de calcul, le dispositif de commande dont l'unité de vote majoritaire associée reçoit en majorité le premier signal des organes de calcul (1, 2, 3) pouvant être commandé activement par son organe de calcul associé.

2. Système selon la revendication 1, **caractérisé en ce que** les organes de calcul (1, 2, 3) communiquent les uns avec les autres par le biais d'un bus CAN (15).

3. Système selon la revendication 1 ou 2, **caractérisé en ce que** les organes de calcul (1, 2, 3) détectent l'angle du volant de direction dans chaque cas par le biais des premiers capteurs (6, 7, 8).

4. Système selon l'une quelconque des revendications 1 à 3, **caractérisé en ce que** les dispositifs de commande (18, 20 ; 19, 21) présentent dans chaque cas une commande hydraulique (18, 19) avec un vérin de direction à double effet (20, 21).

5. Système selon la revendication 4, **caractérisé en ce que** les deux chambres de vérin (37, 38) du vérin de direction à double effet (20) peuvent être connectées l'une à l'autre par une soupape de dérivation de direction (23).

6. Système selon la revendication 4 ou 5, **caractérisé en ce que** la pression respective dans les deux chambres de vérin (37, 38) du vérin de direction à double effet (20) peut être ajustée par une soupape proportionnelle (34).

7. Système selon l'une quelconque des revendications 4 à 6, **caractérisé en ce qu'**un capteur propre (35, 36) est raccordé à chacune des deux chambres de vérin (37, 38) du vérin de direction à double effet (20).

8. Système selon l'une quelconque des revendications 4 à 7, **caractérisé en ce qu'**une pompe propre (27, 52) pour fournir la pression d'alimentation est associée à la commande hydraulique (18, 19).

9. Système selon la revendication 8, **caractérisé en ce que** la sortie de la pompe (27, 52) est connectée par le biais d'une soupape de non-retour (28) à un accumulateur de pression (30, 50).

10. Système selon la revendication 8 ou 9, **caractérisé en ce qu'**au moins un capteur de pression (31) pour la détection de la pression d'alimentation est prévu, la pompe (27, 52) étant régulée en fonction de la valeur de pression détectée par le biais des organes de calcul à commande active (1, respectivement 3).

11. Système selon la revendication 9 ou 10, **caractérisé en ce qu'**une dérivation avec une soupape de dérivation de pompe (29), débouchant dans un réservoir de fluide hydraulique (24), est raccordée entre la sortie de la pompe (27) et la soupape de non-retour (28).

12. Système selon l'une quelconque des revendications 1 à 11, **caractérisé en ce qu'**un des organes de calcul (2) commande un moteur à couple de direction connecté au volant de direction (22) en vue de simuler un couple de rappel.

13. Système selon l'une quelconque des revendications 4 à 11 et la revendication 12, **caractérisé en ce que** le couple de rappel devant être produit par le moteur à couple de direction sur le volant de direction (22) est calculé à l'aide de la différence de pression entre les deux chambres de vérin (37, 38) du vérin de direction à double effet (20).

14. Système selon l'une quelconque des revendications 1 à 13, **caractérisé en ce que** les organes de calcul (1, 2, 3) et les capteurs qui leurs sont raccordés (6 à 14) sont équipés d'un dispositif d'alimentation en énergie indépendant.

15. Système selon l'une quelconque des revendications 1 à 14, **caractérisé en ce qu'**une routine est implémentée dans les organes de calcul (1, 2, 3), laquelle permet à l'organe de calcul respectif effectuant la commande, de formuler un ordre de commutation aux autres organes de calcul, ceux-ci modifiant de ce fait leurs signaux reçus des unités de vote majoritaire (4, 5), de sorte qu'un autre organe de calcul capable d'effectuer des commandes se charge des contrôles dans le système, **en ce que** cet autre organe de calcul commande alors le dispositif de command qui lui est associé.

16. Système selon l'une quelconque des revendications 1 à 15, comprenant en outre :

un mécanisme de pédale de frein, au moins un premier vérin de frein sur roue et au moins un deuxième vérin de frein sur roue, qui appartiennent chacun à différents circuits de freinage qui présentent chacun une commande hydraulique (18, 19) ainsi qu'un nombre de troisièmes capteurs (9, 10, 11) correspondant à la pluralité impaire d'organes de calcul (1, 2, 3), lesquels détectent à chaque fois la position de la pédale de frein (44) et sont reliés à chaque fois à l'un des organes de calcul (1, 2, 3), un autre organe de calcul (1, respectivement 3), avec lequel le circuit de freinage associé peut être commandé selon le principe de la conduite par fil, étant associé à chaque circuit de freinage.

17. Système selon la revendication 16, **caractérisé en ce que** deux circuits de freinage indépendants l'un de l'autre sont prévus, chaque circuit de freinage présentant à chaque fois deux vérins de frein sur roue (16, 116) dont un vérin de frein sur roue (16) est associé à une roue avant et l'autre vérin de frein sur roue (116) est associé à une roue arrière se trouvant du côté opposé du véhicule.

18. Système selon la revendication 17, **caractérisé en ce que** les chambres de vérin des deux vérins de frein sur roue (16, 116) d'un circuit de freinage peuvent être à chaque fois connectées par le biais d'une soupape proportionnelle (45, 46) à la pompe (27) ou à un renvoi (33) vers un réservoir de fluide hydraulique (24).

19. Système selon la revendication 17 ou 18, **caractérisé en ce que** les chambres de vérin des deux vérins de frein sur roue (16, 116) d'un circuit de freinage peuvent être connectées l'une à l'autre par une soupape de dérivation de freinage (47).

20. Système selon l'une quelconque des revendications 17 à 19, **caractérisé en ce qu'**un capteur de pression propre (48, 49) propre est raccordé aux chambres de cylindre du cylindre de frein sur roue respectif (16, 116).

21. Système selon l'une quelconque des revendications 16 à 20, **caractérisé en ce que** le mécanisme de pédale de frein présente au moins un ressort pour la simulation de la contre-pression d'un système hydraulique de freinage usuel.

FIG. 1

FIG. 2

FIG. 3